# EUROPEAN PATENT APPLICATION

(11) **EP 1 534 036 A2**
(43) Date of publication of application: **25.05.2005**
(21) Application number: 04026542.3
(22) Date of filing: 09.11.2004
(51) Int. Cl.: H04Q 7/38

(54) **Location-based service apparatus, and associated method, for routing a call in a telephonic communication system**

(30) Priority: 24.11.2003 US 720303
(71) Applicant: ALCATEL, 75008 Paris (FR)
(72) Inventor: Kabakia, Mitul B., 75025 Plano, Texas (US); Watts, Ronald Franklin, 75077 Lewisville, Texas (US); Dyer, William, 75025 Plano, Texas (US)
(74) Representative: Dreiss, Fuhlendorf, Steimle & Becker

(57) **Abstract**

Apparatus, and an associated method, by which to facilitate routing of a telephone call originated at an originating station to a designated telephonic station. The designated telephonic station is designated responsive to the location at which the intended called party is positioned. Positioning indicia is determined and stored, automatically, without intervention by the party to whom the call is placed. The location information is stored at a location server that is accessed and used to select the designated telephonic station according to instructions maintained at a call routing instructor.

## Description

The present invention relates generally to a manner by which to provide a location based presence service for a telephonic communication system. More particularly, the present invention relates to apparatus, and an associated method, by which automatically to locate a user and to maintain, automatically, a database identifying the location of the user. The database us used to facilitate routing of a call, placed to the user, to a telephonic station most convenient to the user based upon the user's location.

The user's location is ascertained, and updated, wholly free of user interaction. A location server, e.g., is used to maintain a listing of the user's location. When a call is placed to the user, inquiry is made of the location server, or other depository of the listing, to identify the location of the user. And, selection is made to route the call responsive to the identified location of the user.
The call is routed to any appropriate communication station, such as a WLAN-based or LAN-based SIP phone, a POTS phone, or a cellular mobile station, designated to be used when the user is proximate to, or out of proximity of, designated locations.

### BACKGROUND OF THE INVENTION

The need to communicate telephonically is a seemingly necessary part of modern society.Many communication services are performed telephonically, sometimes between telephonic stations positioned at widely disparate locations. Telephonic communications are effectuated by way of telephonic communication systems that provide call connections between the telephonic stations and pursuant to which the telephonic communications are effectuated.

A telephonic communication system, when installed and made operational typically provides for the communication of voice, as well as non-voice data. Significant portions of the world's populated areas are encompassed by telephonic communication systems. A user of a telephonic communication system communicates therethrough by way of the telephonic, or other communication, stations that are connected to the telephonic networks of the telephonic communication systems. Separate telephonic networks are interconnected, and telephonic communications are effectuable between telephonic stations coupled to different ones of the telephonic networks.

Many conventional telephonic networks make use of circuit-switched communication techniques. During their operation, call connections are formed, and telephonic communications are effectuated upon circuit-switched channels that are dedicated, during a call connection, to a single communication session between a single set of telephonic stations. Telephonic communications are permitted between the telephonic stations of the set of telephonic stations for so long as the circuit-switched connection is maintained. The connection is maintained, however, irrespective of the amount, or regularity, of the telephonic communications between the telephonic stations during the communication session. If communications are carried out only intermittently, the dedicated channel formed pursuant to the circuit-switched connection is inefficiently utilized.

Advancements in digital communication technologies have permitted telephonic communication systems to be constructed and deployed that make use of digital communication techniques. When digital communication techniques are used, shared communication channels, such as those formed pursuant to packet-switched connections, can be used. In a packet-based, or other, communication system that makes use of shared channels, more efficient use of channel bandwidth allocated to the telephonic communication system is possible. That is to say, the bandwidth required for a single-switched connection pursuant to which a single communication session can be carried out, a plurality of packet-switched connections and a corresponding plurality of packet-switched communication sessions can be carried out. More efficient utilization of the communication capacity allocated to the telephonic communication system is provided.

Packet formatting of data is carried out pursuant to a selected formatting protocol. Various packet formatting protocols have been promulgated and standardized. One protocol scheme, the Internet Protocol (IP), or IP protocol, is a formatting scheme used in many communication systems. Communication devices operable in such communication systems are constructed to format, to send, to receive, to transport, and to operate upon, IP formatted data.

Telephonic communications are increasingly effectuated by way of communication systems that provide for packet-switched communications. Some of the telephonic communications are effectuated by way of the internet backbone, or other packet data network. Telephonic stations connected to LANs (local area networks)or WLANs (wireless local area networks), for instance, permit SIP (session interface protocol) phones to be connected thereto, operable by users to communicate telephonically therethrough by way of packet switched connections.

Telephonic communications are also effectuable by way of cellular mobile stations of cellular communication systems. The networks of various types of cellular communication systems have also been installed to encompass significant portions of the populated areas of the world. Telephonic communications are permitted by way of cellular communication networks through the use of cellular mobile stations. Cellular communication systems are now generally also constructed to be operable using digital communication techniques, sometimes also by way of packet switched call connections.

A user might well have access, at different times, to telephonic stations operable in different types of communication systems. A calling party, that is, a party that initiates a call to a user, might best complete the call connection and communicate telephonically with the user at different times, through different ones of the telephonic stations. When a user is not located proximate to a telephonic station to which a call, originated by the calling party, is routed, the user is unable to accept the call and complete the call connection.

Several manners have been proposed by which to route a call in a manner better to facilitate routing of the call to a location at which the user is positioned. For instance, call forwarding services are available to provide such functions. However, call forwarding services require that the user enter call forwarding information. Constant user access is required and increased communication system loading occurs as a result of calls that would not necessarily terminate on a home switching system of the user. Conventional presence servers are sometimes also used. Conventional presence servers are used, for instance, in computer networks. When a user of a computer logs on to a network, the presence server is alerted to the user's presence in the network. When telephonic communications are effectuated by way of such networks, a user's presence at a particular location can analogously be registered. But, here again, active steps are required to be undertaken by the user to update the locational information stored at the presence server.

The existing requirement that the user perform active steps to cause the routing of the call to a desired telephonic station is both tedious and inconvenient. An improved manner by which to update the location of a user would facilitate call routing of calls to telephonic stations in proximity to a user would therefore be advantageous.

It is light of this background information related to routing of calls in a telephonic system that the significant improvements of the present invention have evolved.

### SUMMARY OF THE INVENTION

The present invention, accordingly, advantageously provides apparatus, and an associated method, by which to provide a location-based presence service for a telephonic communication system.

Through operation of an embodiment of the present invention, a manner is provided by which automatically to locate a user. And, thereafter, also automatically, a database identifying the location of a user is maintained. Use of the information is made to facilitate routing of a call to a telephonic station most convenient to a user based upon the location of the user.

The user need not perform any action pursuant to operation of an embodiment of the present invention. The user's location is ascertained, and updated, wholly free of user interaction. A location server, or other storage depository, is used to maintain the history of the user's location. When an originating party places a call to the user, inquiry is made of the information stored at the storage depository. The inquiry is made to identify the up-to-date location of the user. Once the location of the user is ascertained, selection is made to route the call responsive to the identified, i.e., ascertained, location of the user. The call is routed to any appropriate communication station, such as an SIP phone connectable to a WLAN or LAN, a POTS phone, or cellular mobile station, designated to be used when the user is in proximity to, or out of proximity of, designated locations.

In another aspect of the present invention, the user, i.e., the called party to whom a calling party shall place a call, carries a device that determines, or facilitates the determination of, the user. The device, for instance, is formed of a GPS (Global Positioning System) receiver forming part of a cellular mobile station. The GPS receiver operates in conventional manner, to identify the position of the GPS receiver. Indications of the position determined by the GPS receiver are provided to the cellular mobile station transmitter circuitry, or other appropriate transmitter circuitry. And, the indications are communicated, by way of a radio air interface, to the network portion of the cellular communication system. The positional information is thereafter routed to a storage depository whereat the positional indicia is stored.

In another aspect of the present invention, a location server is, coupled to, and accessible by way of, a packet data network. When an originating party subsequently originates a call to the user, the location server is queried to ascertain the location of the user, and the call is routed to a telephonic station designated for use when the user is positioned at the indicated location. In one implementation, the originating party originates at a TDM (time division multiplexed) network to a generic number associated with the user. A call request is routed to a TDM switch. And, the TDM switch generates a query to the location server to ascertain the location of the user.
The location server responds to the query with indications of the location of the user. The switch utilizes the returned information to route the call request to a designated telephonic station. The telephonic station is a telephonic station designated to be used by the user when the user is positioned in selected locations. The designated telephonic station is selectably designated to be of any type of telephonic station with which a call connection with the originating party can be formed.

In another aspect of the present invention, the user designates which telephonic stations that form the designated stations when the user is positioned at selected locations. The information is stored, for instance, at, or is otherwise accessible from, the telephonic switch.

Operations by which to ascertain the position of the user to record the location of the user and to retrieve such information when a call is placed to the user is performed automatically, wholly without interaction by the user to whom the call is directed. The need for the user otherwise manually to update the user's location is obviated.

In these and other aspects, therefore, the present invention, accordingly, advantageously provides apparatus, and an associated method for a communication system. The communication system has a network through which communications are routable to a user positioned to communicate selectably by way of a selected one of a first communication station and at least a second communication station. Routing of the communications by way of a telephonic call router to the selected one of the first and at least second communication stations is facilitated. A positioner is adapted to receive indications of a location at which the user is positioned. The indications are provided to the positioner free of user action. A positioner is adapted to receive indications of a location at which the user is positioned. The indications are provided to the positioner free of user action. The positioner automatically identifies, at least relative to the first and at least second communication stations, positioning of the user. A call routing instructor is coupled to the positioner. The call routing instructor instructs the telephonic call router to which of the first and at least second communication stations to route the call. Instructions generated by the call routing instructor are responsive to identification of the positioning of the user made by the positioner.

A more complete description of the present invention and the scope thereof can be obtained from the accompanying drawings that are briefly summarized below, the following detailed description of the presently-preferred embodiments of the invention, and the appended claims.

### BRIEF DESCRIPTION OF THE DRAWINGS

Figure 1 illustrates a functional block diagram of a telephonic communication system in which an embodiment of the present invention is operable.
Figure 2 illustrates a message sequence diagram representative of signaling generated during operation of the telephonic communication system shown in Figure 1 pursuant to an embodiment of the present invention.
Figure 3 illustrates a method flow diagram listing the method steps of the method of operation of an embodiment of the present invention.

### DETAILED DESCRIPTION

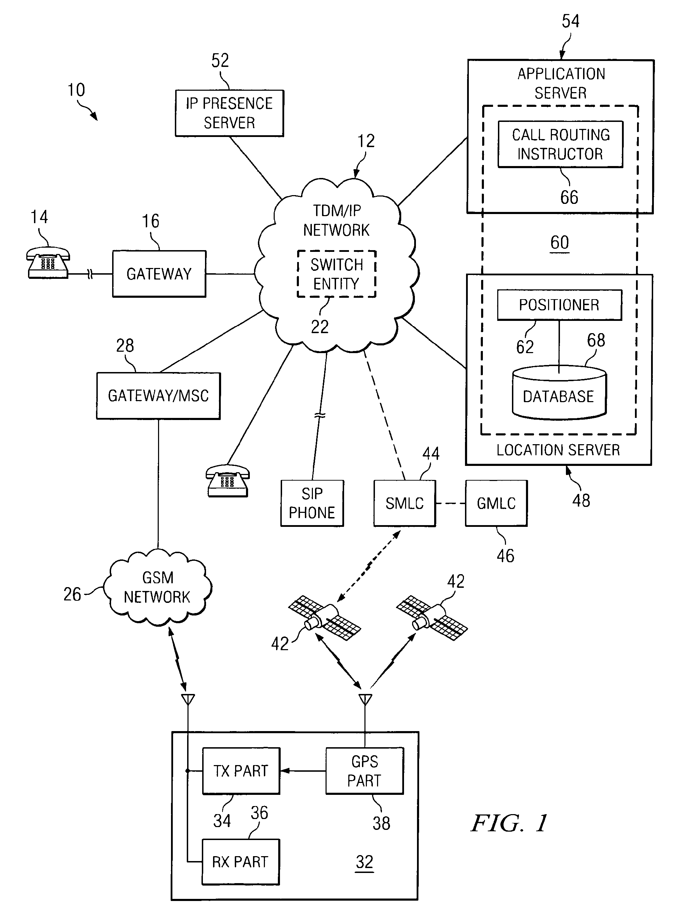

Referring first to Figure 1, a telephonic communication system, shown generally at 10, provides for telephonic communications between telephonic stations. During operation of the telephonic communication system, telephonic calls, originated at an originating station are routed to a terminating station, a call connection is formed, and telephonic communication of data is effectuated. Telephonic communication of both voice data and non-voice data is permitted.

The telephonic communication system, shown in Figure 1, is representative of any of various implementations. Here, in the exemplary implementations, the system includes a network 12 that, in various exemplary implementations, forms a TDM (time division multiplexed) or IP (internet protocol) network. The network is also representative of a network formed of separate parts, including a TDM portion and an IP portion, as well as any of various other network implementations. While the following description shall describe exemplary operation of an embodiment of the present invention with respect to its implementation to include a TDM-based or IP-based network, the teachings of the present invention are analogously also applicable in other types of telephonic communication systems.

Accordingly, while the following description of exemplary operation of an embodiment of the present invention shall be described with respect to its implementation in which the telephonic communication system is formed of either, or both, a TDM network and an IP network, the teachings of the present invention are analogously also applicable in other types of telephonic communication systems.

Telephonic communications are originated by any appropriate telephonic station, suitably coupled to, and operable in, the telephonic communication system. Here, the telephonic station 14 is representative of an originating telephonic station that originates a call to a user, identified pursuant to an embodiment of the present invention by a designated, generic dialing code. The telephonic station is coupled to the network 12, here by way of a gateway (GWY) 16. The telephonic station 14 is representative of any of various types of telephonic stations capable of originating a telephonic call. That is to say, the telephonic station is representative of a POTS (plain old telephone system) phone, a TDM (time division multiplexed) phone, SIP (session interface protocol) session phone, or a wireless mobile station, as well as other telephonic communication stations.

When an originating party originates a call at the telephonic station 14, a call request is routed to the network 12 to be routed under the control of a telephonic switch entity 22. The switch entity 22 is representative of a TDM switch when the network forms the TDM network. And, the switch entity 22 is representative of a soft switch when the network 12 forms an IP network. When the network 12 is of another type, the switch entity performs switching functions, as appropriate for the type of network at which the switch entity is embodied.

The network 26 of a cellular communication system, here a GSM (global system for mobile communications) cellular communication system also forms part of the telephonic communication system. The network 26 is coupled to the network 12 by way of a gateway/mobile switching center (GWY/MSC) 28. Communications are effectuated by the network 26 by way of a radio air interface with mobile stations, of which the mobile station 32 is representative. While the network 26 is here represented as a GSM network, such representation is exemplary only. The network is also representative of the networks of other cellular, and other radio, communication systems, e.g., systems operable pursuant to applicable TDMA (time-division, multiple-access), CDMA (code-division, multiple-access), UMTS (universal mobile telephone service), EDGE (enhanced data for GSM evolution), as well as other operating standards.

The mobile station 32 is carried by a user and includes radio transceiver circuitry formed of a transmit part 34 and a receive part 36. The mobile station also includes a position tracking element, here a GPS receiver 38. The GPS receiver operates in conjunction with a GPS satellite system, here represented by the satellites 42, to obtain positional indicia of the location of the GPS receiver and, thereby, also the location of the user that carries the mobile station 32. In other implementations, positional indicia associated with the mobile station is determined at the network 26, or elsewhere.

The positional indicia associated with the location of the mobile station and, hence, the user thereof, is used pursuant to operation of an embodiment of the present invention by which to route a call originated by an originating party at an originating station, such as the telephonic station 14, to a terminating station most convenient to the user that carries the mobile station 32. Depending upon the location of the user, the call is routed to the mobile station or to another telephonic station.
The positional indicia determined by the GPS receiver, or elsewhere, is communicated to a location server 46 that also is coupled to the network 12.

The routing of the positional indicia is carried out in any of various manners. For instance, the positional indicia is communicated by way of the network 26 through the gateway 28 and the network 12 to be delivered to the location server. Or, for instance, the positional indicia is communicated back to a satellite 42 and, in turn, forwarded to an SMLC (satellite mobile location center) 47 and then to a GMLC (global mobile location center) 48 and then delivered location server 46. The GMLC 48 and the location server are, for instance, commonly located, or connected by way of the network 12.

Additional functional entities are also coupled to the network 12. Here, for instance, an IP (internet protocol) presence server 52 is coupled to the network 12. The IP presence server operates, in conventional manner, to log the presence of an IP-based device in the network 12, when the network forms an IP network. An SIP phone, for instance, is logged in at the IP presence server when the SIP phone is available for use.

An application server 54 also is coupled to the network 12. The application server is also representative of a service control point (SCP).

The user of the mobile station 32 typically also has telephonic access to the telephonic communication system depending upon the user's location. For instance, the user might sometimes be located at one or separate work locations at which a telephonic station is positioned, at other times at a home location, also at which one or more telephonic stations are positioned, and sometimes also located elsewhere at other locations, also at which the user has access to a telephonic station. A calling party is not necessarily aware when originating a call to the user at the location at which the user is positioned.

While the user might always be accessible by way of the mobile station, in some instances, communication by way of the mobile station might be a less-preferred telephonic station by which the user prefers to communicate. For reasons of cost, convenience, or telephonic quality, amongst others, the user might well prefer to communicate telephonically by way of a telephonic station other than the mobile station. When the user is located at the user's work location, for instance, the user might well prefer utilizing a work telephonic station rather than a cellular mobile station for which charges accrue for each minute of talk time. While the user is able to communicate to the originating party that subsequently originates a call or otherwise is able to provide location indicia to the location server to be accessed pursuant to call routing procedures, affirmative steps are conventionally required to be taken by the user to identify the telephonic station to which calls are to be routed.

An embodiment of the present invention provides apparatus 60 automatically to identify the location at which a user is positioned so that a call subsequently placed to the user is routed to a preferred, designated telephonic station. The elements forming the apparatus 60 are functionally represented and are implementable in any desired manner, such as by algorithms executable by processing circuitry, and the elements of the apparatus are implemented at any desired location, here distributed between the application server 54 and the location server 46.

The apparatus, in the exemplary implementation, includes a positioner 62, embodied at the location server and a call routing instructor 66 embodied at the application server. The positioner includes, or otherwise accesses, a database 68 at which positional indicia associated with the location of the mobile station, such as the mobile station 32, and, hence, the user that carries the mobile station. The information stored at the database is accessible by the application server and is used to select to where to route the call originated by the originating party at the originating telephonic station 14. The call routing instructor includes a listing of designated telephonic stations to which to route the call depending upon the location of the user. The positional indicia maintained at the location server is used in conjunction with the information maintained at the application server to route the call to an appropriate terminating telephonic station. For purposes of illustration, possible terminating telephonic stations include a WLAN or LAN based SIP phone 72, a POTS phone 74, and the wireless mobile station 32. Other appropriate terminating telephonic stations can analogously be represented.

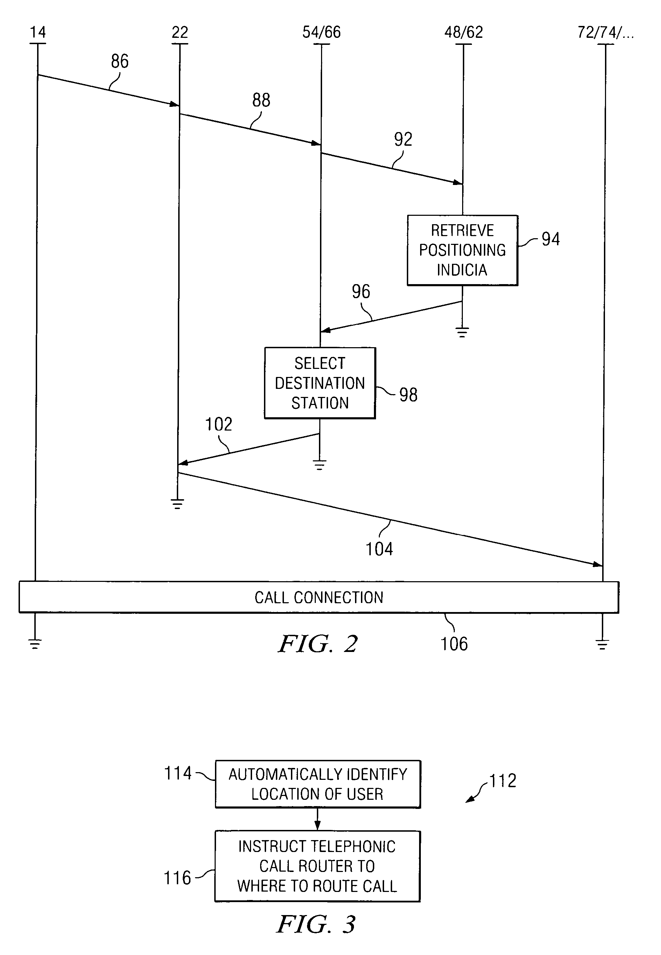

Figure 2 illustrates a message sequence diagram, shown generally at 84, representative of signaling generated when a call placed by an originating party at the originating station 14 is to be completed to a user whose position is identified by the user's carriage of the mobile station 32. First, and as indicated by the segment 86, a call request, initiated at the telephonic station 14 is routed to the network 12 and the switch 22 thereof. The call request includes the telephonic identifier of a generic number associated with the user. The switch, in turn, inquires, indicated by the segment 88, of the application server 54 and the element 66 embodied thereat.

The application server, in turn, queries, indicated by the segment 92, the location server 48 and the positioning indicia stored at the database of the positioner 62 thereof. And, as indicated by the block 94, the positioning indicia is retrieved therefrom. And, as indicated by the segment 96, the information is returned to the application server. The rules contained in the call routing instructor are used to select the telephonic station to which the call is to be routed, as indicated by the block 98. The identity of the designated telephonic station is provided, indicated by the segment 102, to the switch 22. And, responsive thereto, the switch routes the call request, indicated by the segment 104, to the designated telephonic station 72 or 74, etc. A call connection is formed, indicated by the block 106, and telephonic communications commence.

As the user moves, the position of the user is updated, as appropriate, so that up-to-date information is stored at the location server.

Figure 3 illustrates a method flow diagram, shown generally at 112, of the method of operation of an embodiment of the present invention. The method facilitates routing of communications by way of a telephonic call router to a selected one of a first and at least second communication stations.

First, and as indicated by the block 114, the positioning of a user is automatically identified. The positioning identifies the user, at least relative to the first and at least second communication stations. Then, and as indicated by the block 116, the telephonic call router is instructed to which of the first and at least second communication stations to which to route a call. Thereby, the call is routed to a telephonic station positioned in proximity to the location at which the user is positioned.

Thereby, a manner is provided by which automatically route a call to a location at which the intended recipient of a call is positioned. The routing is performed automatically, wholly without intervention by the user to identify the user's location.

The following features and combinations of features may also constitute embodiments of the described and/or claimed invention:
- The described and/or claimed apparatus wherein said portion of said positioner embodied at the positioning server causes updating of the database entries when the positioning of the user changes greater than a selected amount;
- The described and/or claimed apparatus wherein the network of the communication system further comprises an application server coupled to both the location server and to the telephonic call router, and wherein said call routing instructor is embodied at the application server;
- In a method of communicating in a communication system having a network through which communications are routable to a user positioned to communicate selectably by way of a selected one of a first communication station and at least a second communication station, an improvement of a method for facilitating routing of the communications by way of a telephonic call router to the selected one of the first and at least second communication stations, respectively, said method comprising: automatically identifying at least relative to the first and at least second communication stations, positioning of the user; and instructing, responsive to identifications made during said operation of automatically identifying the telephonic call router to which of the first and at least second communication stations to which to route the communications;
- The described method further comprising the operation, prior to said operation of automatically identifying, of providing positional indicia associated with a location at which the user is positioned, and wherein identifications made during said operation of automatically identifying are made responsive to values of the positional indicia provided during said operation of providing;
- The described method wherein the positional indicia provided during said operation of providing is formed by a GPS (global positioning system) device carried by the user;
- The described method wherein the first communication station comprises a mobile station operable in a cellular communication system and wherein the GPS device that forms the positional indicia is embodied at the mobile station;
- The described method further comprising the operation of maintaining a location database that contains database entries, the database entries representative of the positioning of the user, database entries used during said operation of instructing to identify to which of the first and at least second communication stations to which to route the communications.

## Claims

1. In a communication system having a network through which communications are routable to a user positioned to communicate selectably by way of a selected one of a first communication station and at least a second communication station, an improvement of apparatus for facilitating routing of the communications by way of a telephonic call router to the selected one of the first and at least second communication stations, respectively, said apparatus comprising:
a positioner adapted to receive indications of a location at which the user is positioned, the indications provided to said positioner free of user action, said positioner for automatically identifying at least relative to the first and at least second communication stations, positioning of the user;
a call routing instructor coupled to said positioner, said call routing instructor for instructing the telephonic call router to which of the first and at least second communication stations to route the call, instructions generated by said call routing instructor responsive to identification of the positioning of the user made by said positioner.

2. The apparatus of claim 1 wherein the network comprises a TDM (time division multiplexed) network, wherein the telephonic call router comprises a TDM switch embodied at the TDM network, and wherein the instructions generated by said call routing instructor are provided to the TDM switch.

3. The apparatus of claim 1 wherein the user carries a position indicator, the position indicator generating positional indicia, indications of which form the indications that are provided to said positioner.

4. The apparatus of claim 3 wherein the position indicator carried by the user comprises a GPS (global positioning system) device, and wherein the positional indicia generated thereat is provided to said positioner.

5. The apparatus of claim 4 wherein the first communication station comprises a mobile station operable in a cellular radio communication system and wherein the GPS device is embodied at the mobile station and forms a portion thereof.

6. The apparatus of claim 5 wherein the mobile station comprises a cellular-system radio transceiver and wherein the positional indicia generated by the GPS device is provided to said positioner by way of the cellular-system radio transceiver.

7. The apparatus of claim 6 wherein:
the network of the communication system comprises a cellular network portion; wherein the network further comprises a positioning server coupled to the cellular network portion; and wherein at least a portion of said positioner is embodied at the positioning server;
the network further comprises a location server coupled to the positioning server; and wherein at least another portion of said positioner is embodied at the location server;
said positioner further comprises a location database that contains database entries representative of the positioning of the user, the location database maintained at said portion of said positioner embodied at the location server;
the location database of said positioner embodied at the location server is updateable, and wherein said portion of said positioner embodied at the positioning server selectably causes updating of the database entries of the location database.

8. The apparatus of claim 1 wherein the communication system comprises a positioning server and wherein at least a portion of said positioner is embodied at the positioning server.

9. The apparatus of claim 1 wherein the network of the communication system comprises an application server, the application server coupled to the telephonic call router, and wherein said call routing instructor is embodied at the application server.

10. The apparatus of claim 1 wherein the selected one of the first and at least second communication stations to which said call routing instructor instructs the telephonic call router to route the communications is within a selected range of the positioning of the user.
